# EUROPÄISCHE PATENTSCHRIFT

(11) **EP 3 551 308 B1**
(45) Veröffentlichungstag und Bekanntmachung des Hinweises auf die Patenterteilung: **20.09.2023**
(21) Anmeldenummer: 17811907.9
(22) Anmeldetag: 04.12.2017
(51) Int. Cl.: B01D 3/24, B01D 3/20

(54) **KASKADENBODEN, REKTIFIKATIONSKOLONNE ENTHALTEND DEN KASKADENBODEN, VERFAHREN ZUM BETREIBEN EINER SOLCHEN REKTIFIKATIONSKOLONNE UND IHRE VERWENDUNG**
CASCADE TRAY, RECTIFYING COLUMN CONTAINING SAID CASCADE TRAY, METHOD FOR OPERATING SUCH A RECTIFYING COLUMN, AND USE OF SAME
FOND DE CASCADE, COLONNE DE RECTIFICATION CONTENANT LE FOND DE CASCADE, PROCÉDÉ POUR FAIRE FONCTIONNER LADITE COLONNE DE RECTIFICATION ET UTILISATION DE CELLE-CI

(30) Priorität: 06.12.2016 EP 16202419; 06.11.2017 EP 17200048
(43) Veröffentlichungstag der Anmeldung: 16.10.2019
(73) Patentinhaber: Covestro Intellectual Property GmbH & Co. KG, 51373 Leverkusen (DE)
(72) Erfinder: PENNEMANN, Bernd, 51467 Bergisch Gladbach (DE); BAUSA, Jürgen, 51515 Kürten (DE)
(74) Vertreter: Levpat
(86) Internationale Anmeldenummer: PCT/EP2017/081369
(87) Internationale Veröffentlichungsnummer: WO 2018/104226

(56) Entgegenhaltungen:
- DE-C- 949 733
- US-A- 2 085 522
- US-A- 2 713 478
- US-A- 4 439 350
- WILLIAM L BOLLES: "Optimum Bubble-Cap Tray Design", PETROLEUM PROCESSING,, 1. März 1956 (1956-03-01), Seiten 82-95, XP001255100,

## Beschreibung

Die vorliegende Erfindung befasst sich mit einem zum Einsatz in einer Rektifikationskolonne geeigneten Kaskadenboden, der über Öffnungen im Kaskadenwehr verfügt, mit einer Rektifikationskolonne enthaltend mindestens einen erfindungsgemäßen Kaskadenboden, mit einem Verfahren zum Betreiben einer solchen Rektifikationskolonne sowie mit der Verwendung einer erfindungsgemäßen Rektifikationskolonne zur Auftrennung spezifischer Stoffgemische.

Im industriellen Maßstab werden Destillationen zur Trennung von Stoffgemischen in ihre Bestandteile im Allgemeinen in Rektifikationskolonnen durchgeführt. Der Hauptbestandteil einer Rektifikationskolonne ist der Kolonnenkörper; weitere Bestandteile sind insbesondere ein Verdampfer zur Verdampfung des zu trennenden Stoffgemisches und ein Kondensator zur Verflüssigung der Brüden. Der Kolonnenkörper enthält verschiedene Einbauten zur Steigerung der Trennleistung (Intensivierung des Wärme- und Stoffaustausches zwischen aufsteigendem Dampf [in den Zeichnungen mit 2 bezeichnet] und herabrieselnder Flüssigkeit [in den Zeichnungen mit 1 bezeichnet]), z. B. Sieb-, Glocken- oder Ventilböden (Bodenkolonnen), verschiedene Arten von Füllkörpern (Füllkörperkolonnen) oder strukturierte Packungen (Packungskolonnen). Weitere Einbauten sind Flüssigkeitssammler und Flüssigkeitsverteiler, durch welche eine gleichmäßige Verteilung herabrieselnder Flüssigkeit (1) über die gesamte Querschnittsfläche des Kolonnenkörpers sichergestellt wird. Der Kolonnenkörper hat üblicherweise zylindrische Form.

Bei Bodenkolonnen wird unterschieden zwischen solchen mit und solchen ohne Zwangsführung der Flüssigkeit. Böden mit Flüssigkeitszwangsführung werden auch "*Kreuzstromböden"* genannt. Die Erfindung befasst sich mit solchen Kreuzstromböden. Rektifikationskolonnen mit Kreuzstromböden (*Kreuzstromböden* werden fortan kurz als *Böden* und die entsprechenden Kolonnen als *Bodenkolonnen* bezeichnet) besitzen innerhalb des Kolonnenkörpers mindestens einen Boden, über den Flüssigkeit (1) von einer Zulaufseite zu einer Ablaufseite fließt und welcher über Öffnungen verfügt, durch welche heraufströmender Dampf (2) mit der fließenden Flüssigkeit (1) in Kontakt treten kann. Solche Öffnungen sind bevorzugt Löcher, Ventile mit oder ohne beweglichen Teilen oder Glocken.

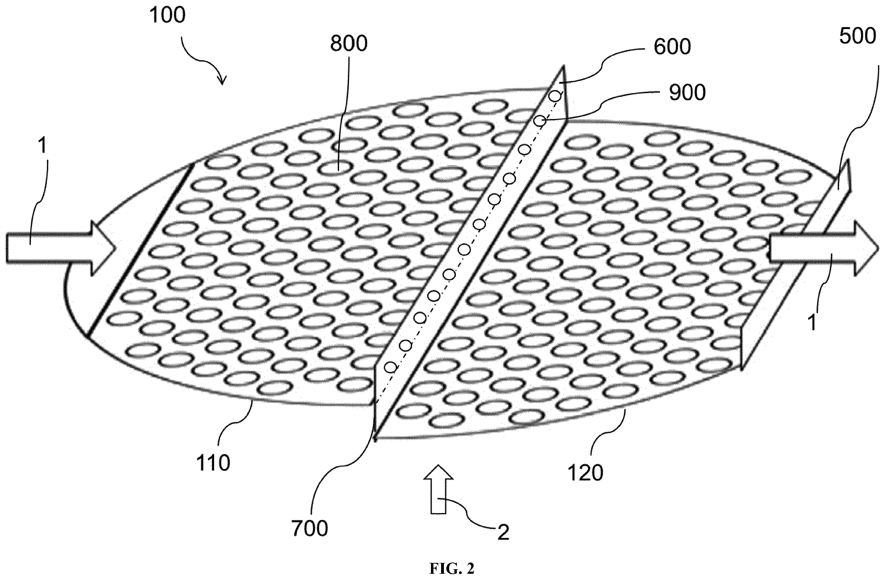

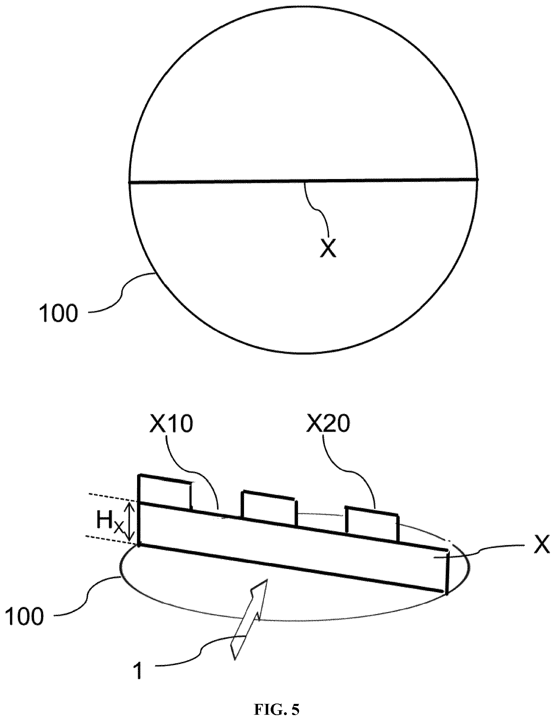

US 4,439,350 beschreibt eine Destillationskolonne, die gleichzeitig als chemischer Reaktor dient, d. h. neben der Stofftrennung findet eine chemische Reaktion statt. Es handelt sich also um eine Reaktivdestillation. Es werden Kreuzstromböden beschrieben, die auf der Zu- und Ablaufseite über Wehre verfügen (vgl. **17** und **12** in FIG. 2 sowie **47** und **42** in FIG. 5). Auf diesen Böden sind perforierte oder poröse Hohlkörper (*"container"* **16** in FIG. 2 sowie **46** in FIG. 5) angeordnet, in denen sich ein für die angestrebte Reaktion geeigneter Katalysator befindet. Die Kolonne wird so betrieben, dass diese Katalysator-gefüllten Hohlköper im Wesentlichen mit Flüssigkeit bedeckt sind, sodass der in ihnen befindliche Katalysator seine Wirkung entfalten kann. Solche Katalysator-gefüllten Hohlköper sind selbstverständlich keine Wehre im fachmännischen Verständnis. Dem trägt das Patent durch eine konsequente begriffliche Unterscheidung Rechnung. In einer Ausführungsform (FIG. 5) sind die Katalysator-gefüllten Hohlköper im Wesentlichen senkrecht zur Fließrichtung der Flüssigkeit angeordnet. Um einen ausreichenden Fluss der Flüssigkeit zu gewährleisten, wird in diesem Fall der Boden mit einer Neigung in Fließrichtung versehen (wie in FIG. 5 gezeigt) oder es wird eine kaskadenförmige Anordnung mit mehreren Ebenen verwendet (vgl. Spalte 5, Zeile 64 bis Spalte 6, Zeile 7). Ob in letzterem Fall an den Stufen der Kaskade überhaupt Wehre zum Einsatz kommen und wenn ja, wie diese ausgestaltet sind, ist der Schrift nicht zu entnehmen.

Bei Böden mit großem Durchmesser und damit großer Fließlänge der Flüssigkeit (1) kann ein großer Unterschied im Flüssigkeitsstand zwischen Zulauf- und Ablaufseite auftreten. Dieser Unterschied ergibt sich aus der Fließlänge der Flüssigkeit (1) und dem Gradienten im Flüssigkeitsstand, der zum Transport der Flüssigkeit über den Boden notwendig ist. Ein zu hoher Unterschied im Flüssigkeitsstand auf dem Boden zwischen Zulauf- und Ablaufseite führt dazu, dass der Strom heraufströmenden Dampfes (2) den Boden bevorzugt in der Nähe des Ablaufs passiert, da dort die Höhe der Flüssigkeitssäule (1) geringer ist. Daher passiert bei gleichem treibendem Druckunterschied mehr Dampf (2) die Öffnungen in der Nähe der Ablaufseite des Bodens als in der Nähe der Zulaufseite des Bodens. Die entsprechende Verringerung des Dampfdurchgangs im Bereich des Zulaufs führt dagegen zum sog. "Durchregnen" in diesem Bereich. Beide Effekte haben zur Folge, dass der Wirkungsgrad des Bodens und damit die Trennleistung der Rektifikationskolonne abnimmt. Um den beschriebenen Effekt zu verhindern, werden Bodenkolonnen bei größeren Innendurchmessern (beispielsweise bei einem Innendurchmesser ab 2,0 m, insbesondere ab 2,5 m) oft mit sog. *Kaskadenböden* bestückt, bei denen die Fließlänge der Flüssigkeit (1) verringert wird, so dass sich bei gleichem Gradienten im Flüssigkeitsstand ein geringerer Unterschied im Flüssigkeitsstand ergibt.

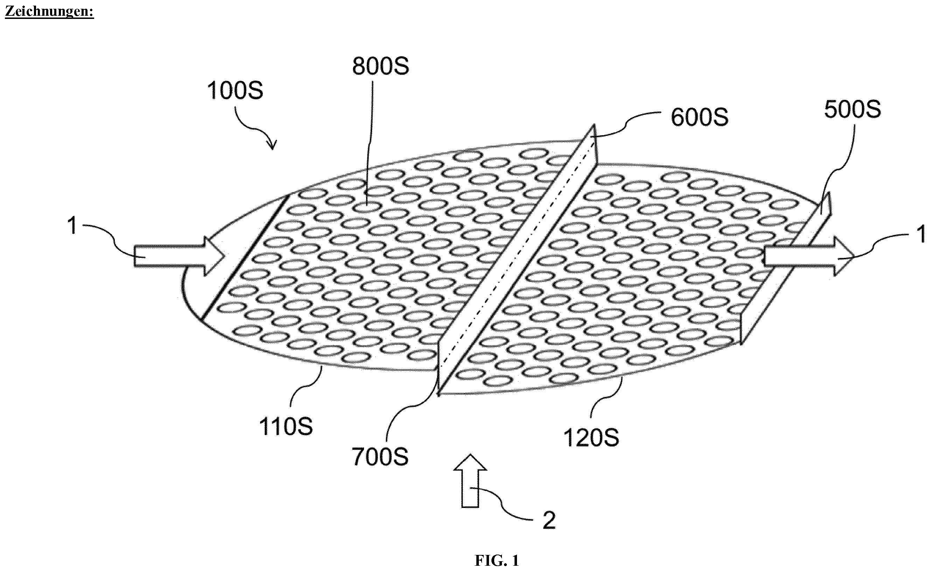

Ein Kaskadenboden zeichnet sich gegenüber einem herkömmlichen Boden dadurch aus, dass der Boden in einzelne Abschnitte unterteilt, zumindest zweigeteilt, ist, und sich am Übergang von einem Abschnitt zum nächsten ein vertikaler Versatz derart befindet, dass der zum Flüssigkeitsablauf hin gelegene Abschnitt des Bodens tiefer liegt als der vorangehende. Oberhalb der so gebildeten "Stufe" befindet sich ein Wehr (das *Kaskadenwehr*). Ein weiteres Wehr befindet sich an der Ablaufstelle (das *Ablaufwehr*). **FIG. 1** illustriert einen solchen Kaskadenboden des Standes der Technik (100S) für den einfachsten Fall mit einer Stufe. Die mit 1 bezeichneten Pfeile kennzeichnen die Fließrichtung der Flüssigkeit. Das Kaskadenwehr ist mit 600S, der die Stufe bildende Versatz mit 700S und das Ablaufwehr mit 500S gekennzeichnet. Durch diese Konstruktionsweise staut sich die zugeführte Flüssigkeit (1) zuerst auf der ersten Hälfte des Bodens (Zulaufseite, 110S) am Kaskadenwehr (600S), läuft dort über, erreicht dann die zweite Bodenhälfte (Ablaufseite, 120S) und staut sich erst dann am Ablaufwehr (500S), um schließlich in den Ablaufschacht (nicht gezeigt in FIG. 1) überzulaufen.

Da das Kaskadenwehr aus geometrischen Gründen bei einem kreisförmigen Kolonnenquerschnitt (wie er üblicherweise verwendet wird) immer länger als das Ablaufwehr ist, über beide Wehre aber die gleiche Flüssigkeitsmenge überläuft, ist die *Wehrbelastung* (Volumenstrom pro Zeiteinheit und Wehrlänge) am Kaskadenwehr geringer als am Ablaufwehr. Da sich aus einer geringeren Wehrbelastung auch eine geringere Überlaufhöhe ergibt, wäre bei gleichen Wehrhöhen von Kaskaden- und Ablaufwehr der Flüssigkeitsstand auf der Zulaufseite (110S) geringer als auf der Ablaufseite (120S). Dies würde zu einer ungleichmäßigen Belastung der beiden Bodenhälften führen und somit die Trennleistung der Kolonne verringern. Um dies zu verhindern, werden üblicherweise zwei Varianten verwendet:
- Das Kaskadenwehr wird etwas höher als das Ablaufwehr ausgeführt, so dass die Summe aus Wehrhöhe und Überlaufhöhe für beide Wehre bei der nomineller Kolonnenlast gleich ist.
- Das Kaskadenwehr ist als sog. "Picket-Fence" ausgeführt. Ein solches Wehr besitzt an der Oberkante rechteckige Aussparungen, durch die die Flüssigkeit passieren kann. Die Aussparungen beginnen bei einer solchen Höhe und die durch die Aussparungen gebildeten "Zinnen" weisen eine solche Höhe auf, dass sichergestellt ist, dass Flüssigkeit (1) nur durch die Aussparungen passieren kann. Die Aussparungen können auch eine andere Form aufweisen, können insbesondere dreieckig sein, sodass sich statt "Zinnen" "*Zacken"* bilden wie bei einem Sägeblatt. Die Höhe des Kaskadenwehres im Bereich der Aussparungen (entspricht der *Höhe H_{X}* wie weiter unten definiert) entspricht der Höhe des Ablaufwehrs, die Gesamtlänge der Aussparungen der Länge des Ablaufwehrs.

Neuere Untersuchungen haben jedoch gezeigt, dass kaskadierte Böden (600S) selbst bei Einhaltung dieser Maßnahmen in bestimmten Betriebszuständen, insbesondere solchen mit vergleichsweise geringer Gaslast und geringen Flüssigkeitsmengenströmen, d. h. bei geringem Durchsatz, zu extrem unterschiedlichen Flüssigkeitsständen auf den beiden Bodenhälften neigen können, was dazu führt, dass das oben geschilderte Problem des "Durchregnens" nicht gelöst, sondern unter Umständen sogar noch verschlimmert wird. Dies geschieht dann, wenn sich die Flüssigkeit auf der ersten Hälfte des Bodens (Zulaufseite, 110S) gar nicht erst soweit aufstaut, wie es notwendig wäre, um über das Kaskadenwehr überzulaufen. In einem solchen Fall "regnet" nun die Flüssigkeit komplett durch die Öffnungen im Bereich der Zulaufseite (11 0S) des Bodens durch. Aufgrund des fehlenden Überlaufs über das Kaskadenwehr erhält die zweite Seite des Bodens (Ablaufseite, 120S) keinen Flüssigkeitszustrom (1), so dass sich dort auch kein Flüssigkeitsstand aufbauen kann. Somit kann der heraufströmende Dampf (2) die zweite, trockene Bodenhälfte (120S) viel leichter passieren als die erste Bodenhälfte (110S), die einen gewissen Flüssigkeitsstand aufweist. Die Folge davon ist, dass fast die gesamte Dampfmenge (2) den Boden durch die Öffnungen (800S) in der zweiten, trockenen Bodenhälfte (120S) passiert *und somit keinen Kontakt zur Flüssigkeit (1)* hat. Letztendlich führt dies zu einer starken Verringerung des Stofftransports und damit zu einem sehr geringen Wirkungsgrad des Bodens, was wiederum die Trennleistung der Rektifikationskolonne verschlechtert. Dieses Problem wird in Chemical Engineering Research and Design, 99 (2015), 43 - 48 (Autoren: J. Bausa und B. Pennemann), diskutiert. Dort wird der Schluss gezogen, Kaskadenböden nur einzusetzen, wenn dies wirklich nötig ist, da ein Kaskadenboden unter Umständen mehr Probleme bereitet als er löst.

Da Kaskadenböden aber auch unbestreitbare Vorteile haben, bestand ein Bedarf an weiteren Verbesserungen in diesem Bereich der Technik. Insbesondere wäre es wünschenswert, Kaskadenböden zur Verfügung zu haben, bei welchen der Flüssigkeitsstand auf beiden Seiten des Kaskadenwehrs stets gleich oder zumindest signifikant weniger stark unterschiedlich ist als im Stand der Technik in bestimmten Betriebszuständen. Dadurch würde das oben geschilderte Problem des extremen Durchregnens bei bestimmten Betriebszuständen nicht oder zumindest nur noch in signifikant vermindertem Umfang auftreten. Dies würde dazu beitragen, Rektifikationskolonnen in einer größeren Vielzahl von Betriebszuständen (insbesondere auch bei geringem Durchsatz) sicher betreiben zu können, ohne die Trennleistung zu beeinträchtigen. Hierdurch würde die Verfügbarkeit von Rektifikationskolonnen erhöht, was wiederum vielfältige ökonomische (Verringerung von Stillstandzeiten, Möglichkeit des geringeren Durchsatzes an zu trennendem Stoffgemisch, Teillastbetrieb bei Nachfrageschwankungen) und ökologische Vorteile (verringerter Energieverbrauch) mit sich bringt.

Überraschend wurde gefunden, dass diesem Bedarf Rechnung getragen werden kann, wenn Kaskadenböden (100) eingesetzt werden, welche im Kaskadenwehr (600) Öffnungen (900) aufweisen (vgl. hierzu **FIG. 2****).**

Ein Gegenstand der vorliegenden Erfindung ist daher insbesondere ein **Kaskadenboden (100)** (bevorzugt mit runder, insbesondere kreisrunder Grundfläche) geeignet zum Inkontaktbringen von in einem Kolonnenkörper (200) herabfließender Flüssigkeit (1) mit heraufströmendem Dampf (2), wobei der Kaskadenboden (100)
- über ein Ablaufwehr (500) zum Aufstauen herabfließender Flüssigkeit (1) verfügt und
- über mindestens ein weiteres, strömungstechnisch vor dem Ablaufwehr angeordnetes, insbesondere in Bezug auf die Grundfläche des Kaskadenbodens (100) mittig angeordnetes, Wehr, das Kaskadenwehr (600), verfügt, wobei der mindestens eine Kaskadenboden (100) an der Position des mindestens einen Kaskadenwehrs (600) einen Versatz (700) derart aufweist (insbesondere eine Stufe aufweist), dass der das Ablaufwehr (500) enthaltende Teil (120) des Kaskadenbodens (100) tiefer liegt als der strömungstechnisch davor liegende Teil (110) des Kaskadenbodens (100), und
- in beiden Teilen (110) und (120) des Kaskadenbodens (100) (also in dem das Ablaufwehr (500) enthaltenden Teil (120) des Kaskadenbodens (100) und in dem strömungstechnisch davor liegenden Teil (110) des Kaskadenbodens (100)) über, optional verschließbare, Öffnungen (800) zum Durchlass des heraufströmenden Dampfes (2) verfügt,
wobei das Kaskadenwehr (600) über Öffnungen (900) zum Durchlass der Flüssigkeit (1) verfügt, und insbesondere über 1 bis 20, bevorzugt 1 bis 6 Öffnungen (900), verfügt, wobei die Öffnungen (900) bevorzugt kreisrunde, quadratische oder rechteckige Löcher sind, wobei die Gesamtfläche der Öffnungen bevorzugt 0,5 % bis 3,0 %, besonders bevorzugt 0,8 % bis 1,5 % der Gesamtfläche beträgt, die das Kaskadenwehr (600) ohne die Öffnungen (900) hätte.

Ein weiterer Gegenstand der Erfindung ist eine **Rektifikationskolonne (10 000)** enthaltend mindestens einen Kaskadenboden (100) wie zuvor beschrieben, insbesondere eine Rektifikationskolonne (10000) zur Auftrennung eines Stoffgemisches (10), wobei die Rektifikationskolonne (10000) mindestens einen Kaskadenboden (100) zum Inkontaktbringen im Kolonnenkörper (200) herabfließender Flüssigkeit (1) mit heraufströmendem Dampf (2) aufweist, wobei der mindestens eine Kaskadenboden (100)
- an einer Stelle, der Zulaufstelle (310) des Kaskadenbodens (100), mit einem ersten Reservoir (410) für im Kolonnenkörper (200) herabfließende Flüssigkeit (1) und an einer anderen, der Zulaufstelle (310) gegenüberliegenden Stelle, der Ablaufstelle (320), mit einem zweiten Reservoir (420) zur Aufnahme von aus dem mindestens einen Kaskadenboden (100) über ein Ablaufwehr (500) abfließender Flüssigkeit (1) strömungstechnisch verbunden ist,
- über mindestens ein weiteres Wehr, das Kaskadenwehr (600), verfügt, das zwischen der Zulaufstelle (310) und der Ablaufstelle (320) angeordnet ist, insbesondere mittig angeordnet ist, wobei der mindestens eine Kaskadenboden (100) an der Position des mindestens einen Kaskadenwehrs (600) einen Versatz (700) derart aufweist (insbesondere eine Stufe aufweist), dass der in Richtung auf die Auslaufstelle (320) liegende, das Ablaufwehr (500) enthaltende Teil (120) des mindestens einen Kaskadenbodens (100) tiefer liegt als der strömungstechnisch davor liegende Teil (110) des mindestens einen Kaskadenbodens (100),
- in beiden Teilen (110) und (120) des Kaskadenbodens (100) (also in dem das Ablaufwehr (500) enthaltenden Teil (120) des Kaskadenbodens (100) und in dem strömungstechnisch davor liegenden Teil (110) des Kaskadenbodens (100)) über, optional verschließbare, Öffnungen (800) zum Durchlass des heraufströmenden Dampfes (2), insbesondere Löcher, Ventile, Ventile ohne bewegliche Teile und/oder Glocken, verfügt,
wobei das Kaskadenwehr (600) über Öffnungen (900) zum Durchlass der aus dem ersten Reservoir (410) über den mindestens einen Kaskadenboden (100) in das zweite Reservoir (420) fließenden Flüssigkeit (1) verfügt, und insbesondere über 1 bis 20, bevorzugt 1 bis 6 Öffnungen (900), verfügt, wobei die Öffnungen (900) bevorzugt kreisrunde, quadratische oder rechteckige Löcher sind, wobei die Gesamtfläche der Öffnungen bevorzugt 0,5 % bis 3,0 %, besonders bevorzugt 0,8 % bis 1,5 % der Gesamtfläche beträgt, die das Kaskadenwehr (600) ohne die Öffnungen (900) hätte.

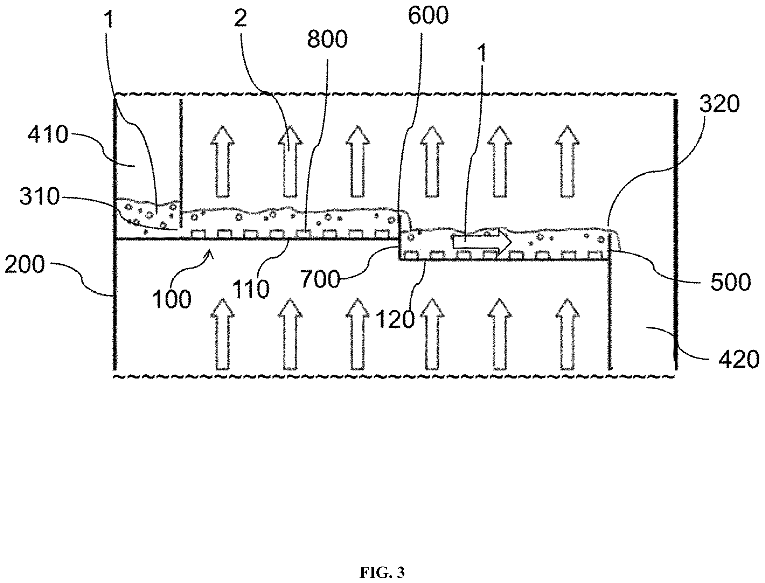

**FIG. 3** zeigt einen Ausschnitt aus einer erfindungsgemäßen Rektifikationskolonne (10000).

Weitere Gegenstände der Erfindung sind ein **Verfahren zum Betreiben einer erfindungsgemäßen Rektifikationskolonne (10 000)** sowie die **Verwendung einer erfindungsgemäßen Rektifikationskolonne (10 000) zur Auftrennung spezifischer Stoffgemische (10).**

Erfindungsgemäße *"Kaskadenböden* (100) " weisen bevorzugt eine runde, insbesondere kreisrunde, Grundfläche auf, wie in FIG. 1, 2, 4 und 5 gut sichtbar, da sie für den Einbau in Rektifikationskolonnen geeignet sein sollen und diese im Allgemeinen zylindrische Form haben.

Die Flüssigkeit (1) fließt über den Kaskadenboden (100), wie in allen Abbildungen gezeigt, wobei die Fließrichtung durch einen Blockpfeil dargestellt ist.

Durch den mindestens einen "*Versatz (700)*" (insbesondere eine *Stufe*) wird der Kaskadenboden (100) in mindestens zwei *"Teile",* einen das Ablaufwehr (500) enthaltenden Teil (120) und einen strömungstechnisch davor liegenden Teil (110), aufgeteilt, die eine, in Strömungsrichtung des Dampfes (2) betrachtet, unterschiedliche Höhe aufweisen (d. h. einer liegt tiefer als der andere) und daher auch als *Ebenen* bezeichnet werden können. Gibt es mehr als einen Versatz (700), so gibt es entsprechend mehr als zwei Teile (Ebenen). In diesem Fall verfügen alle Teile (Ebenen) über *"optional verschließbare Öffnungen (800) zum Durchlass des heraufströmenden Dampfes (2)* ". Bevorzugt umfasst der erfindungsgemäße Kaskadenboden (100) genau einen Versatz (700), d. h. insbesondere genau eine Stufe, und umfasst folglich genau zwei Teile (Ebenen), den das Ablaufwehr (500) enthaltenden Teil (120) und den strömungstechnisch davor liegenden Teil (110).

Der Begriff "*Wehr"* wird im Rahmen dieser Erfindung, ganz im Sinne des fachmännischen Verständnisses, für eine Einrichtung gebraucht, durch welche der Fluss von Flüssigkeit, d. h. konkret der über den Kaskadenboden (100) strömenden Flüssigkeit (1), aufgestaut wird. Dies gilt sowohl für das Kaskadenwehr (600) als auch das Ablaufwehr (500). Die Flüssigkeit fließt dabei *über das jeweilige Wehr hinweg* und, im Falles des Kaskadenwehrs (600), auch durch die Kaskadenwehr-Öffnungen (900) sowie, im Falle des Ablaufwehrs (500), gegebenenfalls auch durch die - weiter unten noch näher erläuterten - in bestimmten Ausführungsformen vorhandenen Ablaufwehr-Öffnungen (910) hindurch. *"Wehre"* im Sinne der vorliegenden Erfindung sind dabei Einrichtungen, die bevorzugt aus Metall oder Kunststoff, insbesondere aus Metall, gefertigt sind. *"Wehre"* im erfindungsgemäßen Sinne sind keine Katalysator-gefüllten Hohlkörper. *"Wehre"* im Sinne der Erfindung sind nämlich - mit Ausnahme selbstverständlich der Kaskadenwehr-Öffnungen (900) und gegebenenfalls der Ablaufwehr-Öffnungen (910) - massive Einrichtungen, d. h. sie sind auch nicht porös.

Erfindungsgemäß einzusetzende *"Wehre"* (Kaskadenwehr und Ablaufwehr) stehen im Wesentlichen senkrecht, insbesondere senkrecht, auf dem Kaskadenboden (100) und weisen eine im Wesentlichen rechteckige Grundform auf. Damit ist gemeint, dass das Wehr, parallel zur Grundfläche des Kaskadenbodens (100) betrachtet, **(i)** entweder eine rechteckige Form hat oder **(ii)** an seiner Oberkante Aussparungen aufweist, die zur Bildung von "Zinnen" oder "Zacken" (siehe die obigen Erläuterungen) führen.

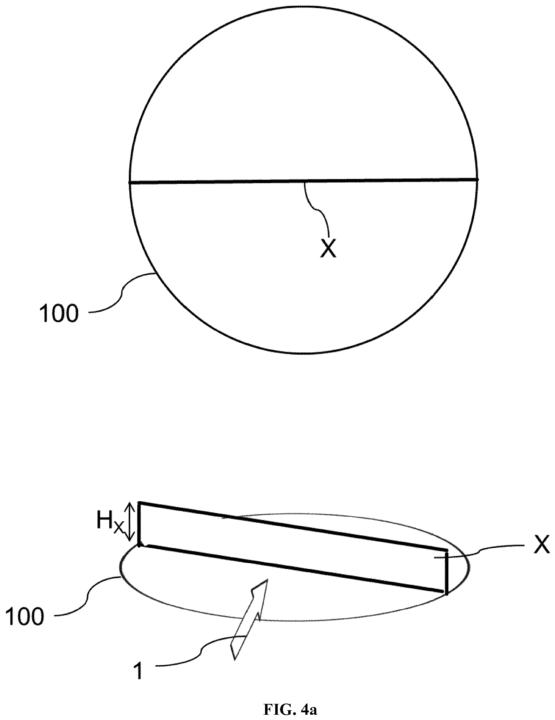

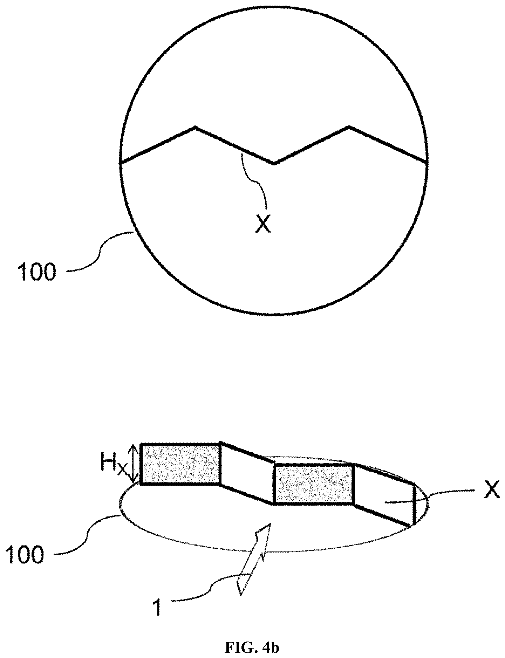

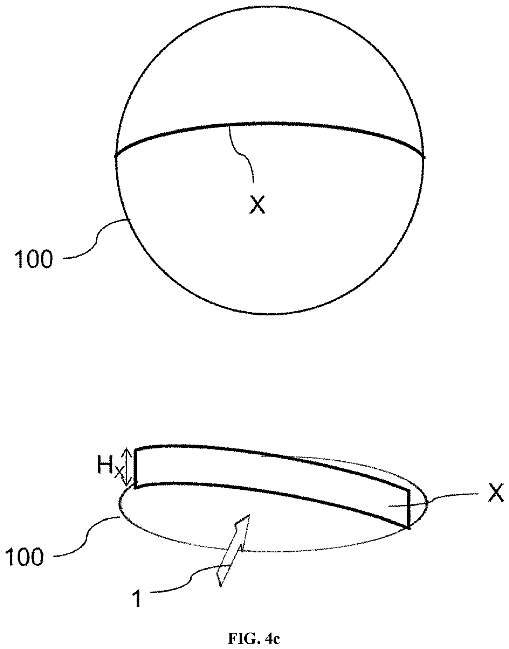

Beispiele für **(i)** sind schematisch in **FIG. 4** für einen Kaskadenboden (100) mit kreisrunder Grundfläche gezeigt, *wobei der Versatz (700) aus Gründen der zeichnerischen Vereinfachung nicht dargestellt ist.* Ebenfalls aus Gründen der zeichnerischen Vereinfachung ist nur ein Wehr gezeigt, das sowohl für das Kaskadenwehr (600) [wobei die Öffnungen (900) der Einfachheit halber nicht eingezeichnet sind] als auch das Ablaufwehr (500) stehen kann und das im Folgenden mit "X" bezeichnet wird. Dieses Wehr X ist der Einfachheit halber mittig eingezeichnet; dies ist nicht als zwingende Einschränkung zu verstehen.

**FIG. 4a** zeigt ein Beispiel für ein Wehr X mit rechteckiger Form in der Draufsicht (oben) und dasselbe Wehr X parallel zur Grundfläche des Kaskadenbodens (100) betrachtet (unten). In der unteren Darstellung ist die rechteckige Form gut sichtbar. In dieser einfachsten Ausführungsform ist das Wehr X, von oben betrachtet, eine Sekante des Kaskadenbodens (100) mit kreisrunder Grundfläche.

**FIG. 4b** zeigt ein Beispiel für ein Wehr X mit rechteckiger Form, das "Knicke" aufweist, in der Draufsicht (oben) und dasselbe Wehr X parallel zur Grundfläche des Kaskadenbodens (100) betrachtet (unten).

**FIG. 4c** zeigt ein Beispiel für ein Wehr X mit rechteckiger Form, das gebogen ist, in der Draufsicht (oben) und dasselbe Wehr X parallel zur Grundfläche des Kaskadenbodens (100) betrachtet (unten).

Die Höhe H_{X} eines Wehrs X, von der weiter unten noch näher die Rede sein wird, bezeichnet in diesen Fällen einfach die vom Kaskadenboden bis zur Oberkante des Wehrs X gemessene Höhe, wie in den Zeichnungen dargestellt.

Die in den FIG. 4a bis 4c gezeigten Ausführungsformen sind sowohl für das Kaskadenwehr (600) als auch das Ablaufwehr (500) denkbar. Bevorzugt ist die Ausführungsform gemäß FIG. 4a.

Die Ausführungsform **(ii)** ist schematisch in **FIG. 5** gezeigt. Die Aussparungen (X10) führen zur Bildung von "Zinnen" (X20). Die Aussparungen können nicht nur, wie in FIG. 5 gezeigt, rechteckig sein. Eine abweichende Form, insbesondere eine dreieckige Form, die zur Bildung von "Zacken" führt, ist ebenfalls möglich. Die Höhe H_{X} wird in jedem Fall *ohne* die "Zinnen" (X20) oder die "Zacken" gemessen, das heißt sie wird bis zu der Höhe, ab welcher die Aussparungen beginnen, gemessen, wie in der Abbildung gezeigt. Auch in der Ausführungsform (ii) können die Wehre X wie in FIG. 4b gezeigt Knicke aufweisen oder wie in FIG. 4c gezeigt gebogen sein. Bevorzugt ist jedoch auch hier die Ausgestaltung, bei der das Wehr X, von oben betrachtet, eine Sekante des Kaskadenbodens (100) mit runder (insbesondere kreisrunder) Grundfläche ist.

Der Ausdruck *"strömungstechnisch vor dem Ablaufwehr angeordnet"* und vergleichbare Formulierungen beziehen sich auf die Fließrichtung der Flüssigkeit (1) auf dem Wehr X. Diese ist in den Abbildungen FIG. 4 und FIG. 5 durch einen Blockpfeil dargestellt.

### Es folgt zunächst eine Kurzzusammenfassung verschiedener möglicher Ausführungsformen der Erfindung:

In einer **ersten Ausführungsform der erfindungsgemäßen Rektifikationskolonne (10 000),** die mit allen anderen Ausführungsformen kombiniert werden kann, sind die Öffnungen (800) zum Durchlass des heraufströmenden Dampfes (2) ausgewählt aus der Gruppe bestehend aus Löchern, Ventilen, Ventilen ohne bewegliche Teile und Glocken.

In einer **zweiten Ausführungsform der erfindungsgemäßen Rektifikationskolonne (10 000),** die mit allen anderen Ausführungsformen kombiniert werden kann, hat der Kolonnenkörper (200) zylindrische Form und weist insbesondere einen Innendurchmesser von 2,0 m bis 6,0 m, bevorzugt von 2,5 m bis 4,0 m, auf.

In einer **dritten Ausführungsform der erfindungsgemäßen Rektifikationskolonne (10 000),** die mit allen anderen Ausführungsformen kombiniert werden kann, befinden sich die Unterkanten der Öffnungen (900) im unteren Drittel der Höhe H₆₀₀ des Kaskadenwehrs (600) (zur Definition von H₆₀₀ siehe die Erläuterungen weiter unten und FIG. 4, 5, 7 und 8).

In einer **vierten Ausführungsfrom der erfindungsgemäßen Rektifikationskolonne (10 000),** die mit allen zuvor genannten Ausführungsformen kombiniert werden kann, verfügt auch das Ablaufwehr (500) über Öffnungen (910).

In einer **fünften Ausführungsform der erfindungsgemäßen Rektifikationskolonne (10 000),** die eine besondere Ausgestaltung der vierten Ausführungsform ist, wird die Höhe H₇₀₀ des Versatzes (700) so gewählt, dass diese Höhe H₇₀₀ im gesamten Arbeitsbereich der Rektifikationskolonne (10000) höher ist als der im kontinuierlichen Betrieb in dem das Ablaufwehr (500) enthaltenden Teil (120) des Kaskadenbodens (100) jeweils vorliegende Flüssigkeitsstand (= Flüssigkeitspegel; im Rahmen der vorliegenden Erfindung meint der Begriff Flüssigkeitsstand oder Flüssigkeitspegel stets die vom jeweiligen Teil (von der jeweiligen Ebene) aus gemessene Höhe des Flüssigkeitsspiegels).

In einer **sechsten Ausführungsform der erfindungsgemäßen Rektifikationskolonne (10 000),** die eine Alternative zur vierten Ausführungsform ist, ansonsten aber mit allen anderen Ausführungsformen kombiniert werden kann, verfügt das Ablaufwehr (500) nicht über Öffnungen.

In einer **siebten Ausführungsform der erfindungsgemäßen Rektifikationskolonne (10 000),** die eine besondere Ausgestaltung der sechsten Ausführungsform ist, werden die Höhe des Ablaufwehrs (500), H₅₀₀, die Höhe des Versatzes (700), H₇₀₀, und die Höhe der Oberkante der Öffnungen (900) über dem Kaskadenboden (100), H₉₀₀, so aufeinander abgestimmt, dass im gesamten Arbeitsbereich der Rektifikationskolonne (10000) die Öffnungen (900) im Kaskadenwehr (600) im kontinuierlichen Betrieb von der in dem das Ablaufwehr (500) enthaltenden Teil (120) des Kaskadenbodens (100) vorliegenden Flüssigkeit (1) vollständig verdeckt werden.

In einer **achten Ausführungsform der erfindungsgemäßen Rektifikationskolonne (10 000),** die eine besondere Ausgestaltung der sechsten und siebten Ausführungsform ist, weist das Kaskadenwehr (600) eine größere Höhe H₆₀₀ als das Ablaufwehr (500, H₅₀₀) auf, wobei die Höhendifferenz H₆₀₀ - H₅₀₀ so gewählt ist, dass sich, insbesondere im gesamten Arbeitsbereich der Rektifikationskolonne (10000), im Wesentlichen der gleiche, bevorzugt der gleiche, Flüssigkeitsstand auf dem das Ablaufwehr (500) enthaltenden Teil (120) des Kaskadenbodens (100) und auf dem strömungstechnisch davor liegenden Teil (110) des Kaskadenbodens (100) ausbildet. Für nähere Erläuterungen wird auf die Detailbeschreibung weiter unten verwiesen.

In einer **neunten Ausführungsform der erfindungsgemäßen Rektifikationskolonne (10 000),** die eine eine zur achten Ausführungsform alternative besondere Ausgestaltung der sechsten und siebten Ausführungsform ist, weist das Kaskadenwehr (600) bis zu einer Höhe H₆₀₀ mit Ausnahme der Öffnungen (900) keine Ausspaarungen auf, wobei
das Kaskadenwehr oberhalb der Höhe H₆₀₀ über seine Länge L₆₀₀ in regelmäßigen Abständen mit, bevorzugt rechteckigen, Ausspaarungen (610) der Länge L₆₁₀ versehen ist,
die Höhe H₆₀₀ gleich der Höhe H₅₀₀ des Ablaufwehrs (500) ist,
die Summe der Längen L₆₁₀ um so viel geringer ist als die Länge L₅₀₀, dass sich, insbesondere im gesamten Arbeitsbereich der Rektifikationskolonne (10 000), im Wesentlichen der gleiche, bevorzugt der gleiche, Flüssigkeitsstand auf dem das Ablaufwehr (500) enthaltenden Teil (120) des Kaskadenbodens (100) und auf dem strömungstechnisch davor liegenden Teil (110) des Kaskadenbodens ausbildet.

Für nähere Erläuterungen wird auf die Detailbeschreibung weiter unten verwiesen.

In einer **ersten Ausführungsform *des erfindungsgemäßen Verfahrens zum Betreiben der erfindungsgemäßen Rektifikationskolonne (10 000),*** die insbesondere für die vierte und fünfte Ausführungsform der erfindungsgemäßen Rektifikationskolonne (10000) geeignet ist, wird die Belastung der Rektifikationskolonne (10000) mit dem Stoffgemisch (10) im kontinuierlichen Betrieb so gewählt, dass die Öffnungen (900) im Kaskadenwehr (600) nicht von der auf dem das Ablaufwehr (500) enthaltenden Teil (120) des Kaskadenbodens (100) befindlichen Flüssigkeit (1) bedeckt werden.

In einer **zweiten Ausführungsform des erfindungsgemäßen Verfahrens zum Betreiben der erfindungsgemäßen Rektifikationskolonne (10 000),** die insbesondere für die sechste bis neunte Ausführungsform der erfindungsgemäßen Rektifikationskolonne (10000) geeignet ist, wird die Belastung der Rektifikationskolonne (10000) mit dem Stoffgemisch (10) im kontinuierlichen Betrieb so gewählt, dass die Öffnungen (900) im Kaskadenwehr (600) stets von der auf dem das Ablaufwehr (500) enthaltenden Teil (120) des Kaskadenbodens (100) befindlichen Flüssigkeit (1) vollständig bedeckt werden.

In der **ersten Ausführungsform *der erfindungsgemäßen Verwendung der erfindungsgemäßen Rektifikationskolonne (10 000) zur Auftrennung spezifischer Stoffgemische (10),*** die mit allen Ausführungsformen der erfindungsgemäßen Rektifikationskolonne (10000) kombiniert werden kann, ist das zu trennende Stoffgemisch (10) ausgewählt aus der Gruppe bestehend aus
Wasser-haltigen und/oder Lösungsmittel-haltigen organischen Produktgemischen, welche insbesondere rohe, gegebenenfalls lediglich einer Phasentrennung zur Abtrennung von Reaktionswasser unterworfene, Verfahrensprodukte chemischer Prozesse, insbesondere chemischer Prozesse zur Herstellung von Toluylendiamin, Toluylendiisocyanat, Anilin, Di- und Polyaminen der Diphenylmethanreihe, Di- und Polyisocyanaten der Diphenylmethanreihe oder Phenol, sind;
Leicht- und/oder Hochsieder enthaltenden organischen Produktgemischen, welche insbesondere vorgereinigte, von Wasser und gegebenenfalls vorhandenem Lösungsmittel befreite, Verfahrensprodukte chemischer Prozesse, insbesondere chemischer Prozesse zur Herstellung von Toluylendiamin, Toluylendiisocyanat, Anilin, Di- und Polyaminen der Diphenylmethanreihe, Di- und Polyisocyanaten der Diphenylmethanreihe oder Phenol, sind (zur Definition der Begriffe Leicht- und Hochsieder siehe die Erläuterungen weiter unten);
   und
Ölgemischen, insbesondere Rohöl, Flüssiggas, Benzin, Kerosin, Dieselkraftstoff, Heizöl, Pflanzenöl.

Nachstehend werden die zuvor kurz geschilderten Ausführungsformen und weitere mögliche Ausgestaltungen der Erfindung näher beschrieben. Verschiedene Ausführungsformen können dabei beliebig miteinander kombiniert werden, solange sich für den Fachmann aus dem technischen Zusammenhang nicht eindeutig etwas anderes ergibt.

Es versteht sich von selbst, dass die erfindungsgemäße Rektifikationskolonne (10000), welche einen erfindungsgemäßen Kaskadenboden (100) umfasst, mit allen im Stand der Technik gebräuchlichen Peripheriegeräten wie insbesondere Verdampfer und Kondensatoren ausgestattet werden kann und im Bedarfsfall auch wird. Auch kann eine erfindungsgemäße Rektifikationskolonne (10000) neben dem mindestens einen Kaskadenboden (100) und die zu dessen Betrieb erforderlichen Einrichtungen weitere im Stand der Technik gebräuchliche Einbauten wie insbesondere andere, nicht kaskadierte Böden, Füllkörper und/oder strukturierte Packungen sowie Flüssigkeitssammler und -verteiler enthalten. Alle diese Einrichtungen und ihre Anwendung sind dem Fachmann wohlbekannt und werden daher im Folgenden nicht besonders erwähnt und erläutert.

Die Öffnungen (800) im erfindungsgemäßen Kaskadenboden (100) sind bevorzugt ausgewählt aus der Gruppe bestehend aus Löchern, Ventilen, Ventilen ohne bewegliche Teile und Glocken. Der erfindungsgemäße Kaskadenboden (100) hat bevorzugt eine runde (insbesondere kreisrunde) Grundfläche, da erfindungsgemäße Rektifikationskolonnen (10000) bevorzugt über einen Kolonnenkörper (200) zylindrischer Form verfügen, der insbesondere einen Innendurchmesser von 2,0 m bis 6,0 m, bevorzugt von 2,5 m bis 4,0 m, aufweist.

Damit die Flüssigkeit (1) schon bei einem geringen Flüssigkeitsstand das Kaskadenwehr (600) passieren kann, befinden sich die Öffnungen (900) bevorzugt am Fuß des Kaskadenwehrs (600), d. h. die Unterkante der Öffnungen (900) liegt bevorzugt im unteren Drittel der Höhe H₆₀₀ des Wehres, *der effektiven Wehrhöhe* (die *effektive Wehrhöhe* ist die minimale Flüssigkeitshöhe, die zu einem Überlaufen der Flüssigkeit über das Wehr führt; im Falle einer "picket fence"-Ausführung ist dies die Höhe "ohne Zinnen" bzw. ohne "Zacken", wie weiter unten erläutert). Die Öffnungen (900) sind bevorzugt kreisrunde, quadratische oder rechteckige Löcher, wobei die Gesamtfläche der Öffnungen bevorzugt 0,5 % bis 3,0 %, besonders bevorzugt 0,8 % bis 1,5 % der Gesamtfläche beträgt, die das Kaskadenwehr (600) ohne Öffnungen (900) hätte. Bevorzugt verfügt das Kaskadenwehr über 1 bis 20, insbesondere 1 bis 6 Öffnungen (900).

Auf diese Weise ist ein Anstauen und komplettes Abregnen der Flüssigkeit (1) auf der Zulaufseite (110) des Kaskadenbodens (600) nicht mehr möglich.

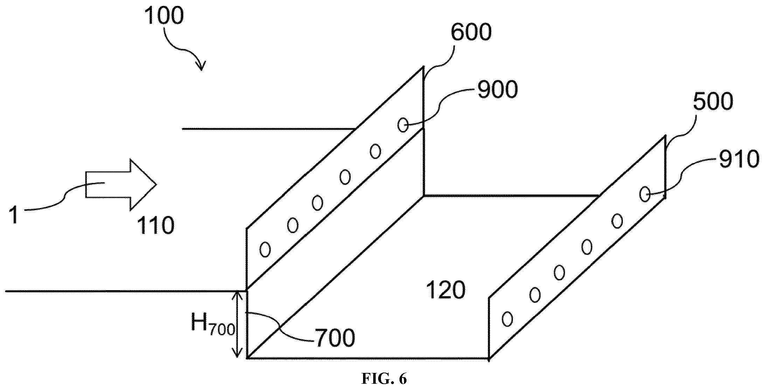

In einer **ersten Variante** der Erfindung werden *beide* Wehre, d. h. das Kaskadenwehr (600) und das Ablaufwehr (500), mit Öffnungen (900, 910) versehen. Diese Variante ist in **FIG. 6** gezeigt, wobei der Kaskadenboden (100) nur aus Gründen der zeichnerischen Vereinfachung in rechteckiger Form dargestellt ist; auch in dieser Ausführungsform ist eine runde, insbesondere kreisrunde Grundfläche wie in FIG. 2, FIG. 4 und FIG. 5 gezeigt, bevorzugt. Durch den Einbau von Öffnungen in beiden Wehren wird die Aufrechterhaltung eines im Wesentlichen (d. h. maximal 5 % voneinander abweichend, bezogen auf den höchsten Flüssigkeitsstand) gleichen Flüssigkeitsstands auf beiden Teilen (110, 120) des Kaskadenbodens (100) erleichtert. Für die bevorzugte Ausgestaltung von Art, Anzahl und Größe der Öffnungen 910 gilt dabei das Gleiche wie zuvor für die Öffnungen 900 ausgeführt.

Bevorzugt weist in dieser Variante der Versatz (700) eine Höhe H₇₀₀ auf, die im gesamten Arbeitsbereich der Rektifikationskolonne (10000) höher ist als der im kontinuierlichen Betrieb im Teil (120) des Kaskadenbodens (100) jeweils vorliegende Flüssigkeitsstand. Der Ausdruck "*im gesamten Arbeitsbereich der Rektifikationskolonne (10000)"* bezieht sich im Rahmen der vorliegenden Erfindung auf die gesamte Bandbreite des möglichen Durchsatzes an Stoffgemisch (10) durch die Rektifikationskolonne (10000) bis hin zur Maximalbelastung. Die *Maximalbelastung* der Rektifikationskolonne (10000) mit dem Stoffgemisch (10) bezeichnet den unter Berücksichtigung der gegebenen Rahmenbedingungen der Rektifikationskolonne (10000) (Höhe, Innendurchmesser, Art und Anzahl der trennwirksamen Einbauten) maximal möglichen Durchsatz (z. B. in kg/h) an Stoffgemisch 10, bei dem noch eine zufriedenstellende Trennung erzielt wird. Demgegenüber gibt es auch eine untere Grenze des Durchsatzes, bei der noch eine eine zufriedenstellende Trennung erzielt wird, die *Minimalbelastung.*

Durch diese Maßnahme werden die Öffnungen (900) im Kaskadenwehr (600) nicht vom Flüssigkeitsstand auf der zweiten Bodenhälfte (120) überdeckt, und die Flüssigkeit (1) kann durch die Öffnungen in beiden Wehren frei ablaufen. Die Gefahr eines verringerten Durchflusses der Flüssigkeit 1 durch die Öffnungen im Kaskadenwehr 600 (und somit letztendlich die Gefahr unterschiedlicher Flüssigkeitsstände auf beiden Bodenhälften (110, 120)) wird dadurch minimiert.

Bei feststehenden apparativen Gegebenheiten wird im kontinuierlichen Betrieb der Rektifikationskolonne (10000) bevorzugt die Belastung der Rektifikationskolonne (10000) mit dem Stoffgemisch (10) so gewählt, dass die Öffnungen (900) im Kaskadenwehr (600) nicht von der auf dem Teil (120) des Kaskadenbodens (100) befindlichen Flüssigkeit (1) bedeckt werden.

Diese erste Variante ist eine Möglichkeit, um beim Betreiben der Rektifikationskolonne (10000) sicherzustellen, dass die gleiche Menge an Flüssigkeit sowohl das Kaskadenwehr (600) als auch das Ablaufwehr (500) durch die jeweiligen Öffnungen (900, 910) passiert. Somit ist die verbleibende Flüssigkeitsmenge, die *über* das Wehr überläuft, für beide Wehre gleich. Bei entsprechender Gestaltung der Wehre (größere Wehrhöhe am Kaskadenwehr oder Einsatz eines Kaskadenwehrs mit Aussparungen wie weiter oben beschrieben) ergibt sich damit der gleiche Flüssigkeitsstand auf beiden Bodenhälften (110, 120).

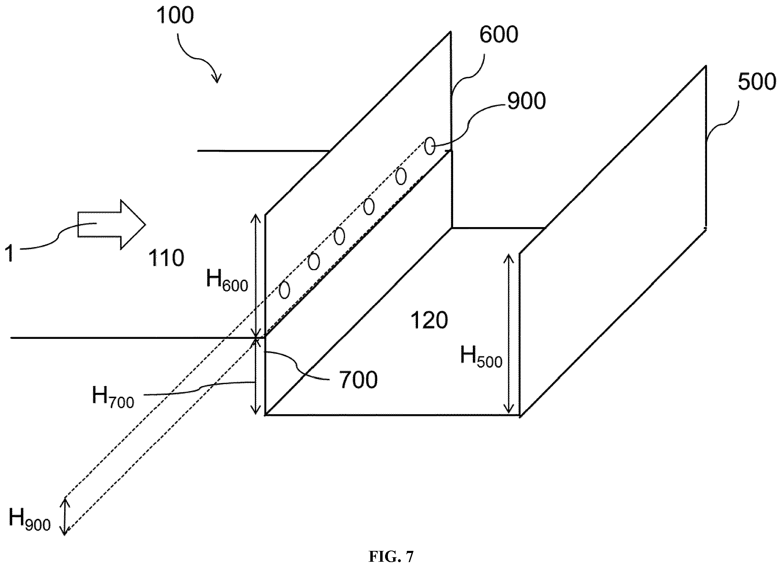

In einer **zweiten Variante** der Erfindung weist nur das Kaskadenwehr Öffnungen (900) auf. Auch durch diese Maßnahme wird die Aufrechterhaltung eines im Wesentlichen (d. h. maximal 5 % voneinander abweichend, bezogen auf den höchsten Flüssigkeitsstand) gleichen Flüssigkeitsstands auf beiden Teilen (110, 120) des Kaskadenbodens (100) erleichtert. Diese Ausführungsform ist in **FIG. 7** gezeigt, wobei der Kaskadenboden (100) nur aus Gründen der zeichnerischen Vereinfachung in rechteckiger Form dargestellt ist; auch in dieser Variante ist eine runde, insbesondere kreisrunde Grundfläche wie in FIG. 2, FIG. 4 und FIG. 5 gezeigt, bevorzugt. Bevorzugt werden in dieser Variante die Höhe des Ablaufwehrs (500), H₅₀₀, die Höhe des Versatzes (700), H₇₀₀ und die (vom Teil 110 des Kaskadenbodens aus gemessene) Höhe der Oberkante der Öffnungen (900) über dem Kaskadenboden (100), H₉₀₀, so aufeinander abgestimmt, dass im gesamten Arbeitsbereich der Rektifikationskolonne (10000) die Öffnungen (900) im Kaskadenwehr (600) im kontinuierlichen Betrieb der Rektifikationskolonne (10 000) von der im Teil (120) des Kaskadenbodens (100) vorliegenden Flüssigkeit (1) vollständig verdeckt werden. In der Praxis lässt sich dies am Einfachsten realisieren, indem man bei gegebenem Wert für den Versatz H₇₀₀ die Höhe des Ablaufwehres H₅₀₀ und die Höhe der Oberkante der Öffnungen H₉₀₀ entsprechend anpasst. Die Überdeckung der Öffnungen (900) im kontinuierlichen Betrieb der Rektifikationskolonne (10000) führt dazu, dass der Flüssigkeitsstrom durch die Öffnungen (900) bei vollständiger Flüssigkeitsfüllung beider Bodenhälften (110, 120) abnimmt, so dass wieder ein größerer Teil der Flüssigkeit (1) über das Kaskadenwehr (600) überläuft. Um die Verringerung von Überlaufmenge und damit auch Überlaufhöhe durch den *verbleibenden* Flüssigkeitsstrom durch die Öffnungen (900) auszugleichen, kann entweder das Kaskadenwehr etwas angehoben (erste Ausgestaltung), oder aber die aktive Überlauflänge des Kaskadenwehrs (600) so verringert werden, dass der Flüssigkeitsstrom durch die Öffnungen (900) gerade ausgeglichen wird (zweite Ausgestaltung).

In der ersten Ausgestaltung dieser zweiten Variante weist das Kaskadenwehr (600) eine größere Höhe H₆₀₀ als das Ablaufwehr (500, H₅₀₀) auf, wobei die Höhendifferenz H₆₀₀ - H₅₀₀ so gewählt ist, dass sich, insbesondere im gesamten Arbeitsbereich der Rektifikationskolonne (10 000), im Wesentlichen der gleiche, bevorzugt der gleiche, Flüssigkeitsstand auf beiden Teilen (110, 120) des Kaskadenbodens (100) ausbildet, obwohl die Überlaufmenge über das Kaskadenwehr (600) um den Durchfluss durch die Öffnungen (900) im Kaskadenwehr (600) verringert ist. *"Im Wesentlichen der gleiche Flüssigkeitsstand"* bedeutet dabei, dass die Flüssigkeitsstände in den einzelnen Teilen (110, 120) (oder Ebenen, siehe die Erläuterungen weiter oben) des Kaskadenbodens (100) um maximal 5 %, bezogen auf den höchsten Flüssigkeitsstand, voneinander abweichen. Weist der Kaskadenboden mehr als zwei Teile (mehr als zwei Ebenen) auf, so beträgt die größte Abweichung zweier Flüssigkeitsstände voneinander nicht mehr als 5 %, bezogen auf den höchsten Flüssigkeitsstand. Das Merkmal *"Flüssigkeitsstand"* bezieht sich auf die vom jeweiligen Teil (von der jeweiligen Ebene) aus gemessene Höhe des Flüssigkeitsspiegels.

In der alternativen zweiten Ausgestaltung der zweiten Variante weist das Kaskadenwehr (600) bis zu einer Höhe H₆₀₀ mit Ausnahme der Öffnungen (900) keine Ausspaarungen auf, wobei
das Kaskadenwehr oberhalb der Höhe H₆₀₀ über seine Länge L₆₀₀ in regelmäßigen Abständen mit, insbesondere rechteckigen, Ausspaarungen (610) der Länge L₆₁₀ versehen ist,
die Höhe H₆₀₀ gleich der Höhe H₅₀₀ desAblaufwehrs (500) ist,
die Summe der Längen L₆₁₀ um so viel geringer ist als die Länge L₅₀₀, dass sich, insbesondere im gesamten Arbeitsbereich der Rektifikationskolonne (10000), im Wesentlichen der gleiche, bevorzugt der gleiche, Flüssigkeitsstand auf beiden Teilen (110, 120) des Kaskadenbodens ausbildet, obwohl die Überlaufmenge über das Kaskadenwehr (600) um den Durchfluss durch die Öffnungen (900) im Kaskadenwehr (600) verringert ist.

*"Im Wesentlichen der gleiche Flüssigkeitsstand"* bedeutet dabei wie zuvor definiert, dass die Flüssigkeitsstände in den einzelnen Teilen (110, 120) (oder Ebenen, siehe die Erläuterungen weiter oben) des Kaskadenbodens (100) um maximal 5 %, bezogen auf den höchsten Flüssigkeitsstand, voneinander abweichen. Weist der Kaskadenboden mehr als zwei Teile (mehr als zwei Ebenen) auf, so beträgt die größte Abweichung zweier Flüssigkeitsstände voneinander nicht mehr als 5 %, bezogen auf den höchsten Flüssigkeitsstand. Das Merkmal *"Flüssigkeitsstand"* bezieht sich auf die vom jeweiligen Teil (von der jeweiligen Ebene) aus gemessene Höhe des Flüssigkeitsspiegels.

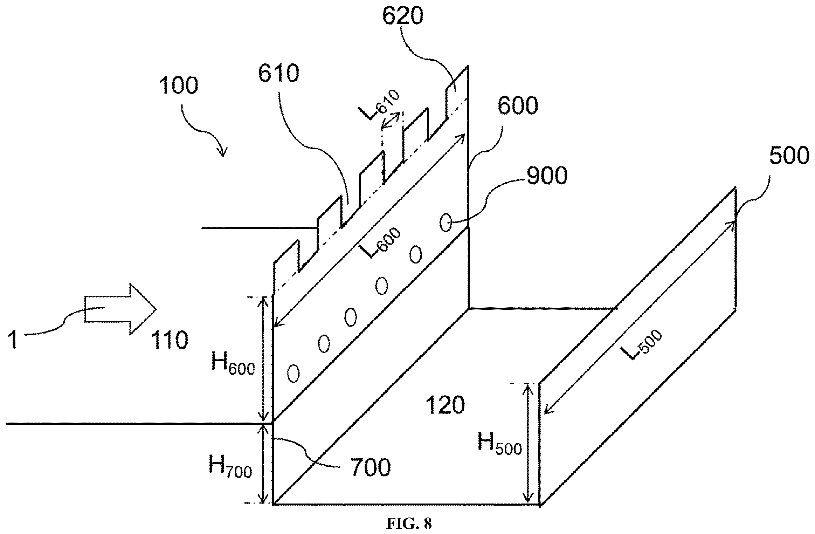

Diese Ausführungsform ist in **FIG. 8** gezeigt, wobei der Kaskadenboden (100) nur aus Gründen der zeichnerischen Vereinfachung in rechteckiger Form dargestellt ist; auch in dieser Ausführungsform ist eine runde, insbesondere kreisrunde Grundfläche wie in FIG. 2, FIG. 4 und FIG. 5 gezeigt, bevorzugt. Die Aussparungen (610) führen zur Bildung von "Zinnen" (620); eine Ausführungsform mit dreieckigen "Zacken" ist ebenfalls möglich. Wie bereits erläutert, ist im Rahmen der vorliegenden Erfindung mit der Höhe eines Wehrs im Falle des Vorhandenseins von Aussparungen wie in FIG. 8 gezeigt stets die Höhe *ohne Zinnen (oder Zacken)* gemeint. Die Länge L₆₁₀ bezeichnet im Rahmen der vorliegenden Erfindung die Länge der Aussparungen an der größten Stelle; das heißt bei dreieckigen Aussparungen ist L₆₁₀ die Länge der oberen Seite des Dreiecks.

In allen Ausgestaltungen der zweiten Variante wird die Rektifikationskolonne (10000) bevorzugt derart betrieben, dass ihre Belastung mit dem Stoffgemisch (10) im kontinuierlichen Betrieb so gewählt wird, dass die Öffnungen (900) im Kaskadenwehr (600) stets von der auf dem Teil (120) des Kaskadenbodens (100) befindlichen Flüssigkeit (1) vollständig bedeckt werden.

Diese zweite Variante ist eine weitere Möglichkeit, um beim Betreiben der Rektifikationskolonne (10000) sicherzustellen, dass sich trotz des Flüssigkeitsstromes durch die Öffnungen (900) im Kaskadenwehr (600) auf beiden Teilen (110, 120) der gleiche Flüssigkeitsstand ausbildet.

Die erfindungsgemäße Rektifikationskolonne (10000) eignet sich für die Durchführung von Destillationen bei vermindertem, atmosphärischem und erhöhtem Druck. Sie kann für eine Vielzahl von Trennaufgaben eingesetzt werden. Als geeignete Stoffgemische (10) seien beispielhaft genannt:
Wasser-haltige und/oder Lösungsmittel-haltige organische Produktgemische, insbesondere rohe, gegebenenfalls lediglich einer Phasentrennung zur Abtrennung von Reaktionswasser unterworfene, Verfahrensprodukte chemischer Prozesse, insbesondere chemischer Prozesse zur Herstellung von Toluylendiamin, Toluylendiisocyanat, Anilin, Di- und Polyaminen der Diphenylmethanreihe, Di- und Polyisocyanaten der Diphenylmethanreihe oder Phenol - *Abtrennung von Reaktionswasser und gegebenenfalls Lösungsmittel unter Erhalt vorgereinigter organische Produktgemische;*
Leicht- und/oder Hochsieder enthaltende organische Produktgemische, insbesondere vorgereinigte, von Wasser und gegebenenfalls vorhandenem Lösungsmittel befreite, Verfahrensprodukte chemischer Prozesse, insbesondere chemischer Prozesse zur Herstellung von Toluylendiamin, Toluylendiisocyanat, Anilin, Di- und Polyaminen der Diphenylmethanreihe, Di- und Polyisocyanaten der Diphenylmethanreihe oder Phenol - *Abtrennung von Hoch- und Leichtsiedern zur Feinreinigung organischer Produkte;*
Gemische von Isomeren organischer Verbindungen, insbesondere *(E)*/*(Z)*-Isomere, Isomere aromatischer Verbindungen wie die Isomerengemische des Toluylendiamins, Isomerengemische des Toluylendiisocyanats, Isomerengemische der Diamine der Diphenylmethanreihe oder Isomerengemische der Diisocyanate der Diphenylmethanreihe - *Isomerentrennung;*
Ölgemische, insbesondere Rohöl, Flüssiggas, Benzin, Kerosin, Dieselkraftstoff, Heizöl, Pflanzenöle - *Raffination von natürlichen Rohstoffen.*

Als *Leichtsieder* werden dabei Nebenkomponenten bezeichnet, deren Siedepunkt unterhalb dem des zu gewinnenden Wertprodukts liegt. Analog werden Nebenkomponenten, deren Siedepunkt oberhalb dem des zu gewinnenden Wertprodukts liegt, als *Hochsieder* bezeichnet.

## Patentansprüche

1. Kaskadenboden (100) geeignet zum Inkontaktbringen von in einem Kolonnenkörper (200) herabfließender Flüssigkeit (1) mit heraufströmendem Dampf (2), wobei der Kaskadenboden (100)
• über ein Ablaufwehr (500) zum Aufstauen herabfließender Flüssigkeit (1) verfügt und
• über mindestens ein weiteres, strömungstechnisch vor dem Ablaufwehr angeordnetes, Wehr, das Kaskadenwehr (600), verfügt, wobei der mindestens eine Kaskadenboden (100) an der Position des mindestens einen Kaskadenwehrs (600) einen Versatz (700) derart aufweist, dass der das Ablaufwehr (500) enthaltende Teil (120) des Kaskadenbodens (100) tiefer liegt als der strömungstechnisch davor liegende Teil (110) des Kaskadenbodens (100), und
• in dem das Ablaufwehr (500) enthaltenden Teil (120) des Kaskadenbodens (100) und in dem strömungstechnisch davor liegenden Teil (110) des Kaskadenbodens (100) über, optional verschließbare, Öffnungen (800) zum Durchlass des heraufströmenden Dampfes (2) verfügt,
**dadurch gekennzeichnet, dass** das Kaskadenwehr (600) über Öffnungen (900) zum Durchlass der Flüssigkeit (1) verfügt.

2. Rektifikationskolonne (10000) zur Auftrennung eines Stoffgemisches (10), enthaltend mindestens einen Kaskadenboden (100) gemäß Anspruch 1.

3. Rektifikationskolonne (10000) zur Auftrennung eines Stoffgemisches (10) gemäß Anspruch 2, wobei der mindestens eine Kaskadenboden (100)
an einer Stelle, der Zulaufstelle (310) des Kaskadenbodens (100), mit einem ersten Reservoir (410) für im Kolonnenkörper (200) herabfließende Flüssigkeit (1) und an einer anderen, der Zulaufstelle (310) gegenüberliegenden Stelle, der Ablaufstelle (320), mit einem zweiten Reservoir (420) zur Aufnahme von aus dem mindestens einen Kaskadenboden (100) über das Ablaufwehr (500) abfließender Flüssigkeit (1) strömungstechnisch verbunden ist, und wobei das mindestens eine Kaskadenwehr (600) zwischen der Zulaufstelle (310) und der Ablaufstelle (320) angeordnet ist.

4. Rektifikationskolonne (10000) gemäß Anspruch 2 oder 3, bei der die Öffnungen (800) zum Durchlass des heraufströmenden Dampfes (2) ausgewählt sind aus der Gruppe bestehend aus Löchern, Ventilen, Ventilen ohne bewegliche Teile und Glocken.

5. Rektifikationskolonne (10000) gemäß einem der Ansprüche 2 bis 4, bei der Kolonnenkörper (200) zylindrische Form hat.

6. Rektifikationskolonne (10000) gemäß einem der Ansprüche 2 bis 5, bei der sich die Unterkanten der Öffnungen (900) im unteren Drittel der Höhe H₆₀₀ des Kaskadenwehrs (600) befinden.

7. Rektifikationskolonne (10000) gemäß einem der Ansprüche 2 bis 6, bei der das Ablaufwehr (500) über Öffnungen (910) verfügt.

8. Rektifikationskolonne (10000) gemäß Anspruch 7, bei der die Höhe H₇₀₀ des Versatzes (700) so gewählt wird, dass diese Höhe H₇₀₀ im gesamten Arbeitsbereich der Rektifikationskolonne (10000) höher ist als der im kontinuierlichen Betrieb in dem das Ablaufwehr (500) enthaltenden Teil (120) des Kaskadenbodens (100) jeweils vorliegende Flüssigkeitsstand.

9. Rektifikationskolonne (10000) gemäß einem der Ansprüche 2 bis 6, bei der das Ablaufwehr (500) nicht über Öffnungen verfügt.

10. Rektifikationskolonne (10000) gemäß Anspruch 9, bei der die Höhe des Ablaufwehrs (500), H₅₀₀, die Höhe des Versatzes (700), H₇₀₀, und die Höhe der Oberkante der Öffnungen (900) über dem Kaskadenboden (100), H₉₀₀, so aufeinander abgestimmt sind, dass im gesamten Arbeitsbereich der Rektifikationskolonne (10000) die Öffnungen (900) im Kaskadenwehr (600) im kontinuierlichen Betrieb von der in dem das Ablaufwehr (500) enthaltenden Teil (120) des Kaskadenbodens (100) vorliegenden Flüssigkeit (1) vollständig verdeckt werden.

11. Rektifikationskolonne (10000) gemäß Anspruch 9 oder 10, bei der das Kaskadenwehr (600) eine größere Höhe H₆₀₀ als das Ablaufwehr (500), das eine Höhe H₅₀₀ hat, aufweist, wobei die Höhendifferenz H₆₀₀ - H₅₀₀ so gewählt wird, dass sich auf dem das Ablaufwehr (500) enthaltenden Teil (120) des Kaskadenbodens (100) und auf dem strömungstechnisch davor liegenden Teil (110) des Kaskadenbodens (100) Flüssigkeitsstände ausbilden, die um maximal 5 %, bezogen auf den höchsten Flüssigkeitsstand, voneinander abweichen.

12. Rektifikationskolonne (10000) gemäß Anspruch 9 oder 10, bei der das Kaskadenwehr (600) bis zu einer Höhe H₆₀₀ mit Ausnahme der Öffnungen (900) keine Ausspaarungen aufweist, wobei
das Kaskadenwehr oberhalb der Höhe H₆₀₀ über seine Länge L₆₀₀ in regelmäßigen Abständen mit Ausspaarungen (610) der Länge L₆₁₀ versehen ist, wobei die Länge L₆₁₀ die Länge der Ausspaarungen (610) an der größten Stelle bezeichnet,
die Höhe H₆₀₀ gleich der Höhe H₅₀₀ des Ablaufwehrs (500) ist,
die Summe der Längen L₆₁₀ um so viel geringer ist als die Länge des Ablaufwehrs (500), L₅₀₀, dass sich auf dem das Ablaufwehr (500) enthaltenden Teil (120) des Kaskadenbodens (100) und auf dem strömungstechnisch davor liegenden Teil (110) des Kaskadenbodens Flüssigkeitsstände ausbilden, die um maximal 5 %, bezogen auf den höchsten Flüssigkeitsstand, voneinander abweichen.

13. Verfahren zum Betreiben einer Rektifikationskolonne (10000) gemäß einem der Ansprüche 3 bis 8, insbesondere gemäß einem der Ansprüche 7 oder 8, bei dem die Belastung der Rektifikationskolonne (10000) mit dem Stoffgemisch (10) im kontinuierlichen Betrieb so gewählt wird, dass die Öffnungen (900) im Kaskadenwehr (600) nicht von der auf dem das Ablaufwehr (500) enthaltenden Teil (120) des Kaskadenbodens (100) befindlichen Flüssigkeit (1) bedeckt werden.

14. Verfahren zum Betreiben einer Rektifikationskolonne (10000) gemäß einem der Ansprüche 3 bis 6 und 9 bis 12, insbesondere gemäß einem der Ansprüche 9 bis 12, bei dem die Belastung der Rektifikationskolonne (10000) mit dem Stoffgemisch (10) im kontinuierlichen Betrieb so gewählt wird, dass die Öffnungen (900) im Kaskadenwehr (600) stets von der auf dem das Ablaufwehr (500) enthaltenden Teil (120) des Kaskadenbodens (100) befindlichen Flüssigkeit (1) vollständig bedeckt werden.

15. Verwendung einer Rektifikationskolonne (10000) gemäß einem der Ansprüche 2 bis 12 zur Auftrennung eines Stoffgemisches (10) ausgewählt aus der Gruppe bestehend aus
Wasser-haltigen und/oder Lösungsmittel-haltigen organischen Produktgemischen;
Leicht- und/oder Hochsieder enthaltenden organischen Produktgemischen
und
Ölgemischen.

## Claims

1. Cascade tray (100) suitable for contacting liquid (1) flowing downward in a column body (200) with ascending vapor (2), where the cascade tray (100)
• has an outflow weir (500) for banking up downflowing liquid (1) and
• has at least one further weir, the cascade weir (600), which is arranged upstream of the outflow weir, where the at least one cascade tray (100) has an offset (700) at the position of the at least one cascade weir (600) so that the part (120) of the cascade tray (100) containing the outflow weir (500) is at a lower level than the upstream part (110) of the cascade tray (100), and
• in the part (120) of the cascade tray (100) containing the outflow weir (500) and in the upstream part (110) of the cascade tray (100) has openings (800), the openings (800) optionally being closable, for passage of the ascending vapor (2), **characterized in that** the cascade weir (600) has openings (900) for passage of the liquid (1).

2. Rectification column (10 000) for fractionating a mixture (10) of materials, comprising at least one cascade tray (100) according to Claim 1.

3. Rectification column (10 000) for fractionating a mixture (10) of materials according to Claim 2, wherein the at least one cascade tray (100)
is hydrodynamically connected at a position, the inflow position (310), of the cascade tray (100), to a first reservoir (410) for liquid (1) flowing downward in the column body (200) and at another position opposite the inflow position (310), the outflow position (320), to a second reservoir (420) for accommodating liquid (1) flowing out from the at least one cascade tray (100) via the outflow weir (500) and wherein the at least one cascade weir (600) is arranged between the inflow position (310) and the outflow position (320).

4. Rectification column (10 000) according to Claim 2 or 3, wherein the openings (800) for passage of the ascending vapor (2) are selected from the group consisting of holes, valves, valves without movable parts and bubble caps.

5. Rectification column (10 000) according to any of Claims 2 to 4, wherein the column body (200) has a cylindrical shape.

6. Rectification column (10 000) according to any of Claims 2 to 5, wherein the lower edges of the openings (900) are located in the bottom third of the height H₆₀₀ of the cascade weir (600).

7. Rectification column (10 000) according to any of Claims 2 to 6, wherein the outflow weir (500) has openings (910) .

8. Rectification column (10 000) according to Claim 7, wherein the height H₇₀₀ of the offset (700) is selected so that this height H₇₀₀ is, over the entire working range of the rectification column (10 000), higher than the liquid level respectively present in the part (120) of the cascade tray (100) containing the outflow weir (500) in continuous operation.

9. Rectification column (10 000) according to any of Claims 2 to 6, wherein the outflow weir (500) does not have openings.

10. Rectification column (10 000) according to Claim 9, wherein the height of the outflow weir (500), H₅₀₀, the height of the offset (700), H₇₀₀, and the height of the upper edge of the openings (900) above the cascade tray (100), H₉₀₀, are matched to one another in such a way that the openings (900) in the cascade weir (600) are, over the entire working range of the rectification column (10 000), completely covered during continuous operation by the liquid (1) present in the part (120) of the cascade tray (100) containing the outflow weir (500).

11. Rectification column (10 000) according to Claim 9 or 10, wherein the cascade weir (600) has a greater height H₆₀₀ than the outflow weir (500), which has a height H₅₀₀, and the height difference H₆₀₀ - H₅₀₀ is selected so that liquid levels which differ by not more than 5%, based on the highest liquid level, are established on the part (120) of the cascade tray (100) containing the outflow weir (500) and on the upstream part (110) of the cascade tray (100).

12. Rectification column (10 000) according to Claim 9 or 10, wherein the cascade weir (600) does not have any cutouts with the exception of the openings (900) up to a height H₆₀₀, wherein
the cascade weir is provided with cutouts (610) having the length L₆₁₀ at regular intervals over its length L₆₀₀ above the height H₆₀₀, wherein the length L₆₁₀ is the length of the cutouts (610) at the largest position,
the height H₆₀₀ is equal to the height H₅₀₀ of the outflow weir (500),
the sum of the lengths L₆₁₀ is so much smaller than the length of the outflow weir (500), L₅₀₀, that liquid levels which differ by not more than 5%, based on the highest liquid level, are established on the part (120) of the cascade tray (100) containing the outflow weir (500) and on the upstream part (110) of the cascade tray.

13. Method for operating a rectification column (10 000) according to any of Claims 3 to 8, in particular according to either Claim 7 or 8, wherein the loading of the rectification column (10 000) with the mixture (10) of materials is, in continuous operation, selected so that the openings (900) in the cascade weir (600) are not covered by the liquid (1) present on the part (120) of the cascade tray (100) containing the outflow weir (500).

14. Method for operating a rectification column (10 000) according to any of Claims 3 to 6 and 9 to 12, in particular according to any of Claims 9 to 12, wherein the loading of the rectification column (10 000) with the mixture (10) of materials is, in continuous operation, selected so that the openings (900) in the cascade weir (600) are always completely covered by the liquid (1) present on the part (120) of the cascade tray (100) containing the outflow weir (500).

15. Use of a rectification column (10 000) according to any of Claims 2 to 12 for fractionating a mixture (10) of materials selected from the group consisting of
water-containing and/or solvent-containing organic product mixtures;
low boiler- and/or high boiler-containing organic product mixtures
and
oil mixtures.

## Revendications

1. Plateau à cascade (100) approprié à la mise en contact de liquide (1), s'écoulant vers le bas dans un corps (200) de colonne, avec de la vapeur ascendante (2), le plateau à cascade (100)
• étant doté d'un déversoir (500) destiné à la retenue de liquide (1) s'écoulant vers le bas et
• étant doté d'au moins un autre barrage disposé fluidiquement en amont du déversoir, le barrage (600) de cascade, ledit au moins un plateau à cascade (100) comportant un décalage (700) à la position dudit au moins un barrage (600) de cascade, de telle façon que la partie (120) du plateau à cascade (100) qui comporte le déversoir (500) se trouve plus bas que la partie (110) du plateau à cascade (100) qui se trouve fluidiquement en amont de celle-ci, et
• étant doté d'ouvertures (800), pouvant en option être fermées, destinées à laisser passer la vapeur ascendante (2), dans la partie (120) du plateau à cascade (100) qui comporte le déversoir (500) et dans la partie (110) du plateau à cascade (100) qui se trouve fluidiquement en amont de celle-ci,
**caractérisé en ce que** le barrage (600) de cascade est doté d'ouvertures (900) destinées à laisser passer le liquide (1).

2. Colonne de rectification (10 000) destinée au fractionnement d'un mélange de substances (10), comportant au moins un plateau à cascade (100) selon la revendication 1.

3. Colonne de rectification (10 000) destinée au fractionnement d'un mélange de substances (10) selon la revendication 2, dans laquelle ledit au moins un plateau à cascade (100)
est relié fluidiquement en un point, le point d'alimentation (310) du plateau à cascade (100), à un premier réservoir (410) pour liquide (1) s'écoulant vers le bas dans le corps (200) de colonne et, en un autre, le point opposé au point d'alimentation (310), le point de sortie (320), à un deuxième réservoir (420) destiné à la réception de liquide (1) s'écoulant, vers le bas, dudit au moins un plateau à cascade (100), en passant au-dessus du déversoir (500), et dans laquelle ledit au moins un barrage (600) de cascade est disposé entre le point d'alimentation (310) et le point de sortie (320).

4. Colonne de rectification (10 000) selon la revendication 2 ou 3, dans laquelle les ouvertures (800) destinées à laisser passer la vapeur ascendante (2) sont choisies dans le groupe constitué par des trous, des clapets, des clapets sans parties mobiles et des cloches.

5. Colonne de rectification (10 000) selon l'une quelconque des revendications 2 à 4, dans laquelle le corps (200) de colonne a une forme cylindrique.

6. Colonne de rectification (10 000) selon l'une quelconque des revendications 2 à 5, dans laquelle les bords inférieurs des ouvertures (900) se trouvent dans le tiers inférieur de la hauteur H₆₀₀ du barrage (600) de cascade.

7. Colonne de rectification (10 000) selon l'une quelconque des revendications 2 à 6, dans laquelle le déversoir (500) est doté d'ouvertures (910).

8. Colonne de rectification (10 000) selon la revendication 7, dans laquelle la hauteur H₇₀₀ du décalage (700) est choisie de telle façon que cette hauteur H₇₀₀ est plus grande dans toute la zone de travail de la colonne de rectification (10 000) que le niveau de liquide qui se trouve chaque fois, dans le fonctionnement continu, dans la partie (120) du plateau à cascade (100) qui comporte le déversoir (500).

9. Colonne de rectification (10 000) selon l'une quelconque des revendications 2 à 6, dans laquelle le déversoir (500) n'est pas doté d'ouvertures.

10. Colonne de rectification (10 000) selon la revendication 9, dans laquelle la hauteur du déversoir (500), H₅₀₀, la hauteur du décalage (700), H₇₀₀, et la hauteur du bord supérieur des ouvertures (900) au-dessus du plateau à cascade (100), H₉₀₀, sont accordées entre elles de telle façon que dans toute la zone de travail de la colonne de rectification (10 000) les ouvertures (900) dans le barrage (600) de cascade sont entièrement couvertes, dans le fonctionnement continu, par le liquide (1) qui se trouve dans la partie (120) du plateau à cascade (100) qui comporte le déversoir (500) .

11. Colonne de rectification (10 000) selon la revendication 9 ou 10, dans laquelle le barrage (600) de cascade présente une hauteur H₆₀₀ plus grande que le déversoir (500) qui présente une hauteur H₅₀₀, la différence de hauteur H₆₀₀ - H₅₀₀ étant choisie de telle façon que sur la partie (120) du plateau à cascade (100) qui comporte le déversoir (500) et sur la partie (110) du plateau à cascade (100) qui se trouve fluidiquement en amont de celle-ci, se forment des niveaux de liquide qui diffèrent entre eux d'au maximum 5 %, par rapport au niveau le plus haut de liquide.

12. Colonne de rectification (10 000) selon la revendication 9 ou 10, dans laquelle à l'exception des ouvertures (900) le barrage (600) de cascade ne comporte pas d'échancrures jusqu'à une hauteur H₆₀₀,
le barrage de cascade étant muni, au-dessus de la hauteur H₆₀₀, sur sa longueur L₆₀₀, à intervalles réguliers, d'échancrures (610) de longueur L₆₁₀, la longueur L₆₁₀ désignant la longueur des échancrures (610) à l'endroit le plus grand,
la hauteur H₆₀₀ étant égale à la hauteur H₅₀₀ du déversoir (500),
la somme des longueurs L₆₁₀ étant inférieure à la longueur L₅₀₀ du déversoir (500) d'autant que des niveaux de liquide qui diffèrent entre eux d'au maximum 5 %, par rapport au niveau le plus haut de liquide, se forment sur la partie (120) du plateau à cascade (100) qui comporte le déversoir (500) et sur la partie (110) du plateau à cascade qui se trouve fluidiquement en amont de celle-ci.

13. Procédé pour faire fonctionner une colonne de rectification (10 000) selon l'une quelconque des revendications 3 à 8, en particulier selon l'une quelconque des revendications 7 et 8, dans lequel le chargement de la colonne de rectification (10 000) avec le mélange de substances (10) est choisi, dans le fonctionnement en continu, de telle façon que les ouvertures (900) dans le barrage (600) de cascade ne sont pas couvertes par le liquide (1) qui se trouve sur la partie (120) du plateau à cascade (100) qui comporte le déversoir (500).

14. Procédé pour faire fonctionner une colonne de rectification (10 000) selon l'une quelconque des revendications 3 à 6 et 9 à 12, en particulier selon l'une quelconque des revendications 9 à 12, dans lequel le chargement de la colonne de rectification (10 000) avec le mélange de substances (10) est choisi, dans le fonctionnement en continu, de telle façon que les ouvertures (900) dans le barrage (600) de cascade sont toujours couvertes par le liquide (1) qui se trouve sur la partie (120) du plateau à cascade (100) qui comporte le déversoir (500).

15. Utilisation d'une colonne de rectification (10 000) selon l'une quelconque des revendications 2 à 12 pour le fractionnement d'un mélange de substances (10) choisi dans le groupe constitué par
des mélanges de produits organiques contenant de l'eau et/ou contenant des solvants ;
des mélanges de produits organiques contenant des composés à bas point d'ébullition et/ou des composés à haut point d'ébullition
et
des mélanges d'huiles.
